# EUROPÄISCHE PATENTSCHRIFT

(11) **EP 3 701 241 B1**
(45) Veröffentlichungstag und Bekanntmachung des Hinweises auf die Patenterteilung: **28.06.2023**
(21) Anmeldenummer: 18773757.2
(22) Anmeldetag: 21.09.2018
(51) Int. Cl.: G01N 1/22

(54) **STEUERSCHRANKANORDNUNG**
CONTROL CABINET ARRANGEMENT
AGENCEMENT D'ARMOIRES DE COMMANDE

(30) Priorität: 23.10.2017 DE 102017124694
(43) Veröffentlichungstag der Anmeldung: 02.09.2020
(73) Patentinhaber: AVL Analytical Technologies GmbH, 41460 Neuss (DE)
(72) Erfinder: WILLICH, Sascha, 41352 Korschenbroich (DE); DICKOW, Achim, 42555 Velbert (DE); OPITZ, Sonja, 40472 Düsseldorf (DE); ÖZTÜRK, Murat, 41836 Hückelhoven (DE)
(74) Vertreter: terpatent Patentanwälte ter Smitten Eberlein-Van Hoof Rütten Daubert
(86) Internationale Anmeldenummer: PCT/EP2018/075581
(87) Internationale Veröffentlichungsnummer: WO 2019/081139

(56) Entgegenhaltungen:
- JP-A- H1 019 744
- Siemens ET AL: "Siemens PA 01 - 2015 - Analytical Application Sets", , 1. Januar 2013 (2013-01-01), XP055245324, Gefunden im Internet: URL:http://www.automation.siemens.com/sc-s tatic/catalogs/catalog/pa/PA01/en/PA01_en_ Kap04.pdf [gefunden am 2016-01-27]

## Beschreibung

Die Erfindung betrifft eine Steuerschrankanordnung für eine Abgasmessanlage mit einem ersten Steuerschrank, welcher einen ersten Innenraum begrenzt, wobei in dem ersten Innenraum eine erste wärmeerzeugende Komponente der Abgasmessanlage angeordnet ist, wobei durch die Abwärme der wärmeerzeugenden, ersten Komponente die Luft in dem ersten Innenraum erwärmbar ist, und einem zweiten Steuerschrank, welcher einen zweiten Innenraum begrenzt, wobei in dem zweiten Innenraum eine zweite Komponente der Abgasmessanlage angeordnet ist.

Derartige Steuerschränke werden beispielsweise an Rollenprüfständen zur Abgasanalyse von Kraftfahrzeugen eingesetzt. Dabei werden üblicherweise mehrere Steuerschränke vorgesehen, in denen unterschiedliche Komponenten der Abgasmessanlage angeordnet sind. Ein derartiger Steuerschrank ist beispielsweise in "Siemens ET AL: "Siemens PA 01 - 2015 - Analytical Application Sets"" offenbart. So sind beispielsweise bei einer CVS-Anlage in einem ersten Steuerschrank eine Probeentnahmevorrichtung mit der dazugehörigen Ansteuerung und Elektronik angeordnet und in einem zweiten Steuerschrank mindestens ein Abgasbeutel angeordnet. Eine CVS-Anlage ist beispielsweise in der JP H10 19744 A offenbart, wobei in der CVS-Anlage das Abgas direkt mit der aus Umgebung eingeleiteten Luft oder mit der aufbereiteten, insbesondere aufgeheizten Luft, verdünnt werden kann.

Bei einer CVS-Anlage wird während einem Testzyklus das von einem Kraftfahrzeug ausgestoßene Abgas in einen Verdünnungstunnel eingeleitet und darin mit Luft verdünnt. Anschließend wird das durch die Verdünnung entstandene Probengas durch Probeentnahmesonden entnommen und einem oder mehreren Abgasbeuteln zugeführt. Nach Abschluss des Fahrzyklusses wird das in dem Abgasbeutel gesammelte Probengas bezüglich der Schadstoffanteile durch mehrere Analysegeräte analysiert, wobei insbesondere der Kohlendioxid-, der Kohlenmonoxid-, Kohlenwasserstoff- sowie der Stickoxid-Anteil ermittelt werden.

In dem zu analysierenden Abgas ist Wasser in Form von Wasserdampf gelöst, welches unterhalb einer Taupunkttemperatur kondensiert. Diese Kondensation des Wasserdampfs führt zu verfälschten Messergebnissen und muss daher unter allen Umständen vermieden werden, um eine zuverlässige und aussagekräftige Analyse des Abgases bzw. des Probengases zu gewährleisten.

Um der Kondensation des Wasserdampfs vorzubeugen, weisen die Abgasmessanlagen üblicherweise Heizelemente auf, durch die ein Absinken der Abgastemperatur unterhalb der Taupunkttemperatur verhindert wird. Eine derartige Abgasmessanlage offenbart beispielsweise die EP 0 959 339 A2. Die Abgasmessanlage weist einen Verdünnungstunnel auf, aus dem ein aus Abgas und Verdünnungsluft bestehendes Probengas entnommen wird, das entnommene Probengas in einem Abgasbeutel gesammelt wird und anschließend das Probengas bezüglich der im Abgas enthaltenen Schadstoffe durch mehrere Analysegeräte analysiert wird. Um die Kondensation des in dem Abgas bzw. in dem Probengas enthaltenen Wasserdampfs zu verhindern, sind an mehreren Stellen der Abgasmessanlage Heizelemente vorgesehen, durch die die Temperatur des in die Abgasmessanlage einströmenden Abgases sowie die Temperatur des aus dem Verdünnungstunnel entnommenen und zu dem Abgasbeutel strömenden Probengases oberhalb der Taupunkttemperatur gehalten werden. Der Abgasbeutel ist in einem separaten Steuerschrank angeordnet, wobei in dem Steuerschrank ebenfalls eine Heizung angeordnet ist, welche zum Erwärmen des in dem Abgasbeutel gesammelten Probengases vorgesehen ist, so dass eine Kondensation des in dem Abgasbeutel enthaltenen Probengases ebenfalls verhindert wird.

Nachteilig an der in der EP 0 59 339 A2 beschriebenen Ausgestaltung ist, dass zur Verhinderung der Kondensation des in dem Probengas gelösten Wasserdampfs zusätzliche Heizelemente eingesetzt werden, welche einen hohen Energiebedarf aufweisen und zu einer Erhöhung der Betriebskosten der Abgasmessanlage führen.

Die Aufgabe der Erfindung ist es daher, eine Steuerschrankanordnung bereitzustellen, mit der die Kondensation des Wasserdampfs auf eine energieeffiziente und kostengünstige Weise verhindert wird.

Diese Aufgabe wird durch die erfindungsgemäße Steuerschrankanordnung für eine Abgasmessanlage nach Anspruch 1 gelöst.

Erfindungsgemäß sind der erste Innenraum und der zweite Innenraum über mindestens eine fluidische Verbindung miteinander verbunden, wobei die zweite Komponente durch den zwischen dem ersten Innenraum und dem zweiten Innenraum strömenden Luftstrom erwärmbar ist. Dadurch wird auf eine einfache und energieeffiziente Weise die Kondensation des in dem Abgas enthaltenen Wasserdampfs verhindert, wobei die Abwärme der wärmeerzeugenden ersten Komponente dazu genutzt wird, um die zweite Komponente zu erwärmen. Im Betrieb erwärmt sich die erste Komponente aufgrund ihrer Verlustleistung, wobei durch die Abwärme der wärmeerzeugenden ersten Komponente die Luft in dem ersten Innenraum erwärmt wird. Durch die fluidische Verbindung zwischen dem ersten Innenraum und dem zweiten Innenraum strömt die erwärmte Luft zur zweiten Komponente, wodurch die zweite Komponente aufgeheizt wird.

Die wärmeerzeugende, erste Komponente ist eine Spannungsversorgungseinheit, wobei die Spannungsversorgungseinheit eine hohe Abwärme aufweist, welche dazu genutzt wird, um ein Absinken der Temperatur des in dem Abgasbeutel gesammelten Probengases unterhalb der Taupunkttemperatur zu vermeiden.

Der erste Steuerschrank und der zweite Steuerschrank sind unmittelbar nebeneinander angeordnet, wobei eine Seitenwand des ersten Steuerschranks unmittelbar an einer Seitenwand des zweiten Steuerschranks anliegt und die fluidische Verbindung in den beiden aneinander anliegenden Seitenwänden ausgebildet ist. Dadurch kann die fluidische Verbindung einfach und kostengünstig hergestellt werden, wobei die fluidische Verbindung durch zueinander korrespondierende Öffnungen an den aneinander anliegenden Seitenteilen der beiden Steuerschränke ausgebildet ist. Außerdem wird der Wärmeübergang zwischen dem ersten Innenraum und dem zweiten Innenraum verbessert, indem der Wärmeübergang sowohl durch die Konvektion durch die fluidische Verbindung als auch durch eine Wärmeübertragung durch die aneinander anliegenden Seitenwände erfolgt.

Vorzugsweise ist die erste Komponente an der zum zweiten Steuerschrank unmittelbar angrenzenden Seitenwand des ersten Steuerschranks angeordnet, wodurch die Abwärme der ersten Komponente über die aneinander anliegenden Seitenwände direkt an den zweiten Innenraum übertragen wird.

Vorzugsweise sind eine erste fluidische Verbindung und eine zweite fluidische Verbindung vorgesehen, wobei die Luft zwischen dem ersten Innenraum und dem zweiten Innenraum zirkuliert. Dabei strömt durch eine der beiden fluidische Verbindung die erwärmte Luft von dem ersten Innenraum in den zweiten Innenraum und durch die andere fluidische Verbindung die in dem zweiten Innenraum abgekühlte Luft wieder in den ersten Innenraum, so dass die Luftzirkulation zwischen den beiden Steuerschränken erfolgt. Auf diese Weise wird der zweiten Komponente dauerhaft Wärme zugeführt.

In einer bevorzugten Ausgestaltung ist die erste fluidische Verbindung im oberen Bereich des ersten Steuerschranks angeordnet und die zweite fluidische Verbindung ist im unteren Bereich des ersten Steuerschranks angeordnet. Durch eine derartige Anordnung der fluidischen Verbindungen wird eine Luftzirkulation ohne zusätzliche Komponenten erzwungen, indem die durch die erste Komponente erwärmte Luft in dem ersten Innenraum nach oben aufsteigt und durch die im oberen Bereich der Steuerschrankanordnung angeordnete, erste fluidische Verbindung in den zweiten Innenraum strömt. Die in der erwärmten Luft enthaltene Wärme wird an die zweite Komponente übertragen, wodurch sich die Luft abkühlt und im zweiten Innenraum nach unten absinkt. Im unteren Bereich der Steuerschrankanordnung ist die zweite fluidische Verbindung angeordnet, durch die die abgekühlte Luft in den ersten Innenraum strömt. Dieser Vorgang wiederholt sich im Betrieb der Abgasmessanlage dauerhaft.

Vorzugsweise ist in dem ersten Steuerschrank oder in dem zweiten Steuerschrank ein Lüfter angeordnet, wodurch eine Luftzirkulation zwischen den beiden Innenräumen unterstützt wird und die Erwärmung der zweiten Komponente beschleunigt und verbessert wird.

In der bevorzugten Ausgestaltung ist in dem ersten Steuerschrank oder in dem zweiten Steuerschrank eine Heizung angeordnet. Dadurch wird die zweite Komponente zusätzlich erwärmt, so dass eine Kondensation des Wasserdampfs auch bei ungewöhnlichen Umgebungsbedingungen zuverlässig vermieden wird.

Vorzugsweise sind der Lüfter und/oder die Heizung temperaturgeregelt, wobei in dem zweiten Steuerschrank ein Temperatursensor angeordnet ist und in Abhängigkeit von der Temperatur des zweiten Innenraums der Lüfter und/oder die Heizung aktiviert bzw. deaktiviert werden. Dabei werden der Lüfter und/oder die Heizung bei Unterschreitung der Taupunkttemperatur aktiviert. Auf diese Weise kann die Heizung und/oder der Lüfter energiesparend betrieben werden.

In einer vorteilhaften Ausgestaltung ist der zweite Steuerschrank wärmeisoliert, wobei der Innenraum des zweiten Steuerschranks eine Temperatur aufweist, welche höher als die Umgebungstemperatur ist. Dadurch wird der Wärmeverlust von dem zweiten Innenraum bzw. von der zweiten Komponente an die Umgebung reduziert.

Vorzugsweise ist die zweite Komponente ein Abgasbeutel einer Abgasmessanlage, wobei die Spannungsversorgungseinheit eine hohe Abwärme aufweist, welche dazu genutzt wird, um ein Absinken der Temperatur des in dem Abgasbeutel gesammelten Probengases unterhalb der Taupunkttemperatur zu vermeiden.

Es wird somit eine Steuerschrankanordnung für eine Abgasmessanlage bereitgestellt, durch die auf eine einfache und energieeffiziente Weise die Kondensation des in dem Abgas enthaltenen Wasserdampfs verhindert wird, wobei die Abwärme der wärmeerzeugenden ersten Komponente zum Erwärmen der zweiten Komponente genutzt wird.

Nachfolgend wird die Erfindung anhand einer bevorzugten Ausführung unter Bezugnahme auf die anliegenden Zeichnungen näher erläutert.

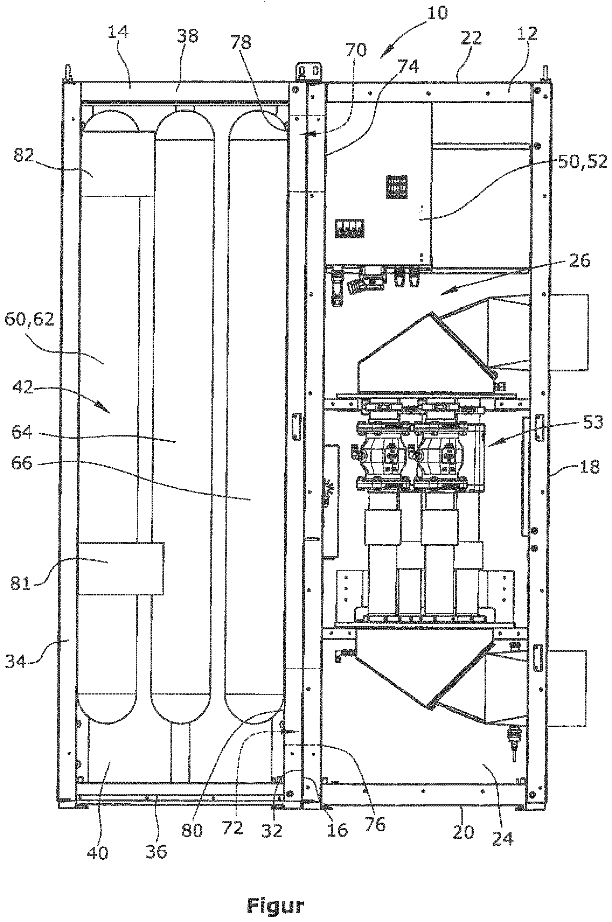

Die Figur zeigt schematisch eine erfindungsgemäße Steuerschrankanordnung für eine Abgasmessanlage.

Die Figur zeigt eine Steuerschrankanordnung 10 für eine CVS-Anlage. Die Steuerschrankanordnung 10 besteht aus einem ersten Steuerschrank 12 und einem zweiten Steuerschrank 14.

Der erste Steuerschrank 12 weist eine erste Seitenwand 16, eine gegenüberliegende zweite Seitenwand 18, ein Bodenelement 20 und ein Deckenelement 22 sowie eine Rückwand 24 auf. An der zur Rückwand 24 gegenüberliegenden Seite ist eine in der Figur nicht dargestellte Tür angeordnet, über welche in einer geöffneten Stellung ein Eingriff in einen ersten Innenraum 26 des ersten Steuerschranks 12 ermöglicht wird.

Der zweite Steuerschrank 14 ist identisch zum ersten Steuerschrank 12 ausgeführt, so dass der zweite Steuerschrank 14 eine erste Seitenwand 32, eine gegenüberliegende zweite Seitenwand 34, ein Bodenelement 36 und ein Deckenelement 38 sowie eine Rückwand 40 aufweist.

In dem ersten Innenraum 26 ist eine wärmeerzeugende erste Komponente 50 angeordnet. Die wärmeerzeugende erste Komponente 50 ist eine Spannungsversorgungseinheit 52, welche zur Bestromung anderer Komponenten der CVS-Anlage, beispielsweise der ebenfalls in dem ersten Steuerschrank 12 angeordnete Durchflussregelvorrichtung 53, vorgesehen ist. Die Spannungsversorgungseinheit 52 weist eine Verlustleistung auf, welche in Form von Wärme an die in den ersten Innenraum 26 vorhandene Luft abgegeben wird.

In dem zweiten Innenraum 42 ist eine zweite Komponente 60 angeordnet, wobei die zweite Komponente 60 ein Abgasbeutel 62 ist. Zusätzlich sind in dem zweiten Innenraum 42 noch weitere zwei Abgasbeutel 64, 66 angeordnet.

Die Abgasbeutel 62, 64, 66 sind ein Bestandteil der CVS-Anlage, wobei bei einer CVS-Anlage das zu analysierende und von einem Kraftfahrzeug während einem Fahrzyklus ausgestoßene Abgas in einem Verdünnungskanal mit Luft verdünnt wird, dieses verdünnte Abgas über eine Entnahmesonde aus dem Verdünnungskanal entnommen wird und den Abgasbeuteln 62, 64, 66 zugeführt wird. Abschließend wird das während dem Fahrzyklus ausgestoßene Abgas bezüglich der Schadstoffanteile durch mehrere Analysegeräte analysiert.

In dem zu analysierenden Abgas ist Wasser in Form von Wasserdampf gelöst, welches unterhalb einer Taupunkttemperatur kondensiert. Diese Kondensation des Wasserdampfs führt zu verfälschten Messergebnissen und muss daher unter allen Umständen vermieden werden, um eine zuverlässige und aussagekräftige Analyse des Abgases zu gewährleisten. Zur Vermeidung der Kondensation wird den Abgasbeuteln 62, 64, 66 Wärme zugeführt, um die Temperatur des in den Abgasbeutel 62, 64, 66 gesammelten Probengases oberhalb der Taupunkttemperatur zu halten.

Erfindungsgemäß sind der erste Innenraum 26 und der zweite Innenraum 42 über eine erste fluidische Verbindung 70 und über eine zweite fluidische Verbindung 72 miteinander verbunden. Dabei weist die erste Seitenwand 16 des ersten Steuerschranks 12 für die erste fluidische Verbindung 70 eine erste Öffnung 74 und für die zweite fluidische Verbindung 72 eine zweite Öffnung 76 auf. Die erste Seitenwand 32 des zweiten Steuerschranks 14 weist ebenfalls für die erste fluidische Verbindung 70 eine erste Öffnung 78 und für die zweite fluidische Verbindung 42 eine zweite Öffnung 80 auf. Dadurch, dass die erste Seitenwand 16 des ersten Steuerschranks 12 und die erste Seitenwand 32 des zweiten Steuerschranks 14 unmittelbar aneinander anliegen, bilden die zueinander korrespondierenden Öffnungen 74, 78 die erste fluidische Verbindung 70 und die zueinander korrespondierenden Öffnung 76, 80 die zweite fluidische Verbindung 72.

Alternativ können die erste Seitenwände 16 des ersten Steuerschranks 12 und die erste Seitenwand 32 des zweiten Steuerschranks 14 einstückig ausgeführt sein. Außerdem können die Rückwand 24 des ersten Steuerschranks 12 und die Rückwand 40 des zweiten Steuerschranks 14 in einer alternativen Ausgestaltung der Steuerschrankanordnung 10 aneinander anliegen, wobei die Öffnungen für die fluidischen Verbindungen 70, 72 in den beiden Rückwänden 24, 40 ausgebildet sind.

Die erste fluidische Verbindung 70 ist im oberen Bereich der beiden Steuerschränke 12, 14 und die zweite fluidische Verbindung 72 ist im unteren Bereich angeordnet. Durch eine derartige Anordnung der beiden fluidischen Verbindungen 70, 72 zirkuliert die Luft zwischen den beiden Innenräumen 26, 42. Dabei erwärmt sich die Luft in dem ersten Innenraum 26 durch die Abwärme der Spannungsversorgungseinheit 52 und steigt im ersten Innenraum 26 nach oben auf. Durch die im oberen Bereich der Steuerschrankanordnung 10 angeordnete erste fluidische Verbindung 70 strömt die erwärmte Luft in den zweiten Innenraum 42. Im zweiten Innenraum 42 erfolgt ein Wärmeübergang von der erwärmten Luft an die Abgasbeutel 62, 64, 66, wodurch sich die Luft abkühlt und nach unten absinkt. Im unteren Bereich strömt die abgekühlte Luft von dem zweiten Innenraum 42 in den ersten Innenraum 26. Auf diese Weise erfolgt eine andauernde Zirkulation der Luft zwischen den beiden Innenräumen 26, 42, wodurch warme Luft dauerhaft in den zweiten Innenraum 42 gefördert wird. Um die Zirkulation der Luft zwischen den beiden Innenräumen 26, 42 zu erhöhen, ist in dem zweiten Steuerschrank 14 ein Lüfter 81 angeordnet. Zusätzlich kann ein weiterer in der Figur nicht gezeigter, temperaturgeregelter Lüfter in einem der Steuerschränke angeordnet sein, welcher unmittelbar an der ersten fluidischen Verbindung 70 angeordnet ist und in Abhängigkeit von der Temperatur der ersten Komponente 50 betrieben wird.

Außerdem ist in dem zweiten Steuerschrank 14 eine Heizung 82 angeordnet und der Steuerschrank 14 ist wärmeisoliert, so dass auch bei niedrigen Umgebungstemperaturen die Temperatur des in den Abgasbeuteln 62, 64, 66 enthaltenen Probengases oberhalb der Taupunkttemperatur gehalten wird.

Es wird somit eine Steuerschrankanordnung 10 für eine Abgasmessanlage bereitgestellt, durch die auf eine einfache und energieeffiziente Weise die Kondensation des in dem Probengas enthaltenen Wasserdampfs verhindert wird, wobei die Abwärme der wärmeerzeugenden ersten Komponente 50 dazu genutzt wird, um die zweite Komponente 60 zu erwärmen und die Kondensation des in dem Probengas enthaltenen Wasserdampfs zu verhindern.

Es sollte deutlich sein, dass der Schutzbereich des vorliegenden Hauptanspruchs nicht auf das beschriebene Ausführungsbeispiel der Steuerschrankanordnung begrenzt ist. Eine derartige Steuerschrankanordnung kann bei unterschiedlichen Abgasmessanlagen eingesetzt werden, wobei in den Steuerschranken unterschiedliche Komponenten der Abgasmessanlage angeordnet werden können.

## Patentansprüche

1. Steuerschrankanordnung für eine Abgasmessanlage mit einem ersten Steuerschrank (12), welcher einen ersten Innenraum (26) begrenzt, wobei in dem ersten Innenraum (26) eine erste wärmeerzeugende Komponente (50) der Abgasmessanlage angeordnet ist, wobei durch die Abwärme der wärmeerzeugenden, ersten Komponente die Luft in dem ersten Innenraum erwärmbar ist, und
einem zweiten Steuerschrank (14), welcher einen zweiten Innenraum (42) begrenzt, wobei in dem zweiten Innenraum (42) eine zweite Komponente (60) der Abgasmessanlage angeordnet ist,
wobei der erste Innenraum (26) und der zweite Innenraum (42) über mindestens eine fluidische Verbindung (70) miteinander verbunden sind, wobei die zweite Komponente (60) durch einen zwischen dem ersten Innenraum (26) und dem zweiten Innenraum (42) strömenden Luftstrom erwärmbar ist, wobei die wärmeerzeugende erste Komponente (50) eine Spannungsversorgungseinheit (52) ist, und wobei der erste Steuerschrank (12) und der zweite Steuerschrank (14) unmittelbar nebeneinander angeordnet sind, wobei eine Seitenwand (16) des ersten Steuerschranks (12) unmittelbar an einer Seitenwand (32) des zweiten Steuerschranks (14) anliegt und die fluidische Verbindung (70) in den beiden aneinander anliegenden Seitenwänden (16, 32) ausgebildet ist.

2. Steuerschrankanordnung nach Anspruch 1,
**dadurch gekennzeichnet, dass**
die erste Komponente (50) an der zum zweiten Steuerschrank (14) unmittelbar angrenzenden Seitenwand (16) des ersten Steuerschranks (12) angeordnet ist.

3. Steuerschrankanordnung nach einem der vorhergehenden Ansprüche, **dadurch gekennzeichnet, dass**
eine erste fluidische Verbindung (70) und eine zweite fluidische Verbindung (72) vorgesehen sind, wobei die Luft zwischen dem ersten Innenraum (26) und dem zweiten Innenraum (42) zirkuliert.

4. Steuerschrankanordnung nach Anspruch 3,
**dadurch gekennzeichnet, dass**
die erste fluidische Verbindung (70) im oberen Bereich der Steuerschränke (12, 14) angeordnet ist und die zweite fluidische Verbindung (72) im unteren Bereich der Steuerschränke (12, 14) angeordnet ist.

5. Steuerschrankanordnung nach einem der vorhergehenden Ansprüche, **dadurch gekennzeichnet, dass**
in dem ersten Steuerschrank (12) oder in dem zweiten Steuerschrank (14) ein Lüfter (81) angeordnet ist.

6. Steuerschrankanordnung nach einem der vorhergehenden Ansprüche, **dadurch gekennzeichnet, dass**
in dem ersten Steuerschrank (12) oder in dem zweiten Steuerschrank (14) eine Heizung (82) angeordnet ist.

7. Steuerschrankanordnung nach einem der Ansprüche 5 oder 6,
**dadurch gekennzeichnet, dass**
der Lüfter (81) und/oder die Heizung (82) temperaturgeregelt sind.

8. Steuerschrankanordnung nach einem der vorhergehenden Ansprüche, **dadurch gekennzeichnet, dass**
der zweite Steuerschrank (14) wärmeisoliert ist, wobei der zweite Innenraum (42) des zweiten Steuerschranks (14) eine Temperatur aufweist, welche höher als die Umgebungstemperatur ist.

9. Steuerschrankanordnung nach einem der vorhergehenden Ansprüche, **dadurch gekennzeichnet, dass**
die zweite Komponente (60) ein Abgasbeutel (62) einer Abgasmessanlage ist.

## Claims

1. Control cabinet arrangement for an exhaust gas measuring system with
a first control cabinet (12) which defines a first interior space (26), wherein a first heat-generating component (50) of the exhaust gas measuring system is arranged in the first interior space (26), wherein the air in the first interior space can be heated by the waste heat of the heat-generating first component (50), and a second control cabinet (14) which defines a second interior space (42), wherein a second component (60) of the exhaust gas measuring system is arranged in the second interior space (42), wherein the first interior space (26) and the second interior space (42) are connected to one another via at least one fluidic connection (70), wherein the second component (60) can be heated by a flow of air flowing between the first interior space (26) and the second interior space (42), wherein the heat-generating first component (50) is a voltage supply unit (52) and wherein the first control cabinet (12) and the second control cabinet (14) are arranged directly adjacent to each other, wherein a side wall (16) of the first control cabinet (12) is directly in contact with a side wall (32) of the second control cabinet (14) and the fluidic connection (70) is formed in the two adjacent side walls (16, 32).

2. Control cabinet arrangement according to claim 1, wherein the first component (50) is arranged at the side wall (16) of the first control cabinet (12) directly adjacent to the second control cabinet (14).

3. Control cabinet arrangement according to one of the preceding claims, wherein a first fluidic connection (70) and a second fluidic connection (72) are provided, wherein the air circulates between the first interior space (26) and the second interior space (42).

4. A control cabinet assembly according to claim 3, wherein the first fluidic connection (70) is disposed in the upper region of the control cabinets (12, 14) and the second fluidic connection (72) is disposed in the lower region of the control cabinets (12, 14).

5. Control cabinet arrangement according to one of the preceding claims, wherein a fan (81) is arranged in the first control cabinet (12) or in the second control cabinet (14).

6. Control cabinet arrangement according to one of the preceding claims, wherein a heater (82) is arranged in the first control cabinet (12) or in the second control cabinet (14).

7. Control cabinet arrangement according to one of claims 5 or 6, wherein the fan (81) and/or the heater (82) are temperature-controlled.

8. Control cabinet arrangement according to one of the preceding claims, wherein the second control cabinet (14) is thermally insulated, wherein the second interior space (42) of the second control cabinet (14) comprises a temperature which is higher than the ambient temperature.

9. Control cabinet arrangement according to one of the preceding claims, wherein the second component (60) is an exhaust gas bag (62) of an exhaust gas measuring system.

## Revendications

1. Ensemble d'armoires de commande pour un système de mesure des gaz d'échappement avec
un premier cabinet de contrôle (12) qui délimite un premier espace intérieur (26), un premier composant (50) générateur de chaleur de système de mesure des gaz d'échappement étant disposé dans le premier espace intérieur (26), l'air dans le premier espace intérieur pouvant être chauffé par la chaleur perdue du premier composant générateur de chaleur, et
un deuxième cabinet de contrôle (14), qui délimite un deuxième espace intérieur (42), un deuxième composant (60) de l'installation de mesure des gaz d'échappement étant disposé dans le deuxième espace intérieur (42),
où
le premier espace intérieur (26) et le deuxième espace intérieur (42) sont reliés entre eux par au moins une connexion fluidique (70), le deuxième composant (60) pouvant être chauffé par un courant d'air circulant entre le premier espace intérieur (26) et le deuxième espace intérieur (42), le premier composant (50) générateur de chaleur étant une unité d'alimentation en tension (52), et dans lequel le premier cabinet de contrôle (12) et le deuxième cabinet de contrôle (14) sont disposés directement côte à côte, une paroi latérale (16) du premier cabinet de contrôle (12) étant directement adjacente à une paroi latérale (32) du deuxième cabinet de contrôle (14) et la connexion fluidique (70) étant formée dans les deux parois latérales (16, 32) adjacentes.

2. Ensemble d'armoires de commande selon la revendication 1, **caractérisé en ce que**
le premier composant (50) est disposé sur la paroi latérale (16) du premier cabinet de contrôle (12) directement adjacente au deuxième cabinet de contrôle (14).

3. Ensemble d'armoires de commande selon l'une des revendications précédentes,
**caractérisé en ce que**
une première connexion fluidique (70) et une deuxième connexion fluidique (72) sont prévues, l'air circulant entre le premier espace intérieur (26) et le deuxième espace intérieur (42).

4. Ensemble d'armoires de commande selon la revendication 3, **caractérisé en ce que**
la première connexion fluidique (70) est disposée dans la partie supérieure des cabinets de contrôle (12, 14) et la deuxième connexion fluidique (72) est disposée dans la partie inférieure des cabinets de contrôle (12, 14).

5. Ensemble d'armoires de commande selon l'une des revendications précédentes,
**caractérisé en ce que**
un ventilateur (81) est disposé dans le premier cabinet de contrôle (12) ou dans le deuxième cabinet de contrôle (14).

6. Ensemble d'armoires de commande selon l'une des revendications précédentes,
**caractérisé en ce que**
un chauffage (82) est disposé dans le premier cabinet de contrôle (12) ou dans le deuxième cabinet de contrôle (14).

7. Ensemble d'armoires de commande selon l'une des revendications 5 ou 6,
**caractérisé en ce que**
le ventilateur (81) et/ou le chauffage (82) sont régulés en température.

8. Ensemble d'armoires de commande selon l'une des revendications précédentes,
**caractérisé en ce que**
le deuxième cabinet de contrôle (14) est isolé thermiquement, le deuxième espace intérieur (42) du deuxième cabinet de contrôle (14) ayant une température qui est supérieure à la température ambiante.

9. Ensemble d'armoires de commande selon l'une des revendications précédentes,
**caractérisé en ce que**
le deuxième composant (60) est un sac d'échappement (62) d'un système de mesure des gaz d'échappement.
